# EUROPEAN PATENT APPLICATION

(11) **EP 4 043 202 A1**
(43) Date of publication of application: **17.08.2022**
(21) Application number: 22156492.5
(22) Date of filing: 14.02.2022
(51) Int. Cl.: B32B 15/01, C22C 5/04, C23C 28/02, C25D 3/50, C25D 3/56, C25D 5/00

(54) **ELECTROPLATED NON-ALLERGENIC PT-NI ALLOY AND BATH AND GALVANIC CYCLE THEREOF**

(30) Priority: 15.02.2021 IT 202100003281
(71) Applicant: BLUCLAD S.p.A., 59100 Prato (IT)
(72) Inventor: CAVACIOCCHI, Lorenzo, 50058 Signa (IT); CANELLI, Danilo Vincenzo, 51037 Montale (IT); LUCONI, Leandro, 59105 Carmignano (IT); SIMONELLI, Matteo, 50019 Sesto Fiorentino (IT); GORI, Gabriele, 51039 Quarrata (IT)
(74) Representative: Valenza, Silvia

(57) **Abstract**

The present invention relates to an electroplated alloy comprising or consisting of:
Pt 60-95%
Ni 5-40%
Co 0-20%
other metals 0-2%...
wherein said other metals are selected from one or more in the group consisting of Iron, Bismuth, Palladium, Ruthenium, Silver, Tellurium, Molybdenum, Rhenium, Copper, Zinc, Tin, Indium, Gallium, Antimony.

The alloy of the invention has a white coloring, glossy and bright up to 5 microns, untensioned and with a hardness of 600 HV. The deposit is resistant to oxidation and the high hardness makes it ideal for use on metal accessories that may be subject to wear such as belt buckles, bag closures, etc... In addition, the alloy of the invention passes the Nickel release and Wear test ensuring the non-allergenicity of the deposit which demonstrates a Nickel release below the limit f detection.

## Description

### FIELD OF THE INVENTION

The present invention refers to the field of electroplated alloys and baths and galvanic cycles thereof; in particular, it refers to a Pt and Nibased non-allergenic alloy and baths and galvanic cycles thereof.

### BACKGROUND

As is well known, accessories for clothing, custom jewellery, footwear and leather goods such as buckles, self-locking fasteners, chains, bracelets, sliders, pullers, snap hooks, shoe clamps, sails, etc. consist of a solid variously shaped body constituted by metals such as brass, zamak, steel, bronze, nickel silver as well as resins or plastics. For aesthetic and technical reasons, galvanic overlays can be applied to the solid body. These galvanic deposits can be subdivided into final deposits, usually consisting of precious metals or their alloys, which determine the final appearance of the object and are the first barrier to oxidation, and preparatory or intermediate deposits which serve to prepare the base material for the deposition of the precious layers.

One of the precious metals that is most widely used both as a white-colored top layer and as an under layer for Gold and Ruthenium finishings is Palladium and its alloys, in particular Pd-Ni alloys, preferably non-allergenic. Unfortunately, in recent years this metal has seen a dramatic increase in price, making the electroplating technique and therefore the galvanic industry economically disadvantaged compared to other deposition techniques such as PVD (Physical Vapor Deposition). In contrast, Platinum, a white metal with chemical-physical characteristics comparable to Palladium, has maintained a competitive cost for use in the galvanic industry, in particular for high fashion. Unfortunately, the well-known Platinum deposition is far from simple. In fact, the baths require very high concentrations of metal and very high working temperatures to deposit sufficient thicknesses, in addition the stress inside the deposit leads very quickly to cracks that affect aesthetics and resistance to oxidation. Therefore, the replacement of Pd or its alloys with Pt or its alloys is not so immediate and obvious despite the comparable chemical and physical characteristics of these two metals.

US2361578 relates to a Platinum and Nickel alloy obtained by melting in which Platinum is present from 98% to 99.75% while Nickel from 0.25% to 2%. This process cannot be used to replace the deposition of thin layers of PtNi. US7959782 relates to a Nickel and Platinum alloy obtained by melting in which Platinum is present from 0.1% to 20%. This process cannot be used to replace the deposition of thin layers of PtNi.

US4427502 relates to an electrochemical bath containing a particular Platinum polyamine complex for the deposition of layers of pure Platinum or its alloys. Such a bath works at alkaline pH between 7.5 and 13, preferably between 10 and 12.5. This working pH is compulsory because below this pH the polyamine complex of Platinum is unstable. The Platinum complex used is not commercially available and the production thereof would require high costs.

US5102509 relates to an electrochemical bath containing a special Platinum salt partially bound to ammonia. The bath, with an alkaline pH greater than 8.5 and at a temperature comprised between 60 and 90°C, requires continuous replenishments of ammonia, which constantly evaporates. As ammonium hydroxide at pH above 8.5 is largely in the form of gaseous ammonia, at that temperature the replenishment of concentrated ammonia is such that it exceeds the volume of evaporated water constantly increasing the level of the liquid inside the treatment tank, making it impossible for the bath to function sustainably.

US7410546 relates to a platinum alloy obtained by melting consisting essentially of 55-63 w/w % platinum, 2-10 w/w % cobalt and 27-43 w/w % copper, wherein said alloy contains a total from 0.001 to 2 by weight. % of one or more additives selected from the group consisting of palladium, iridium and ruthenium. This alloy is not obtained by electrodeposition and therefore cannot be used to deposit thin layers on objects.

It is therefore necessary to have an electroplated alloy and associated galvanic bath, said white alloy that can replace the currently known deposits of pure Pd or alloys thereof (such as non-allergenic Pd-Ni), said bath that possibly has a neutral pH and therefore preserves the under layers as well as the equipment from a possible chemical aggression and that does not emit vapours or toxic gases such as ammonia.

### SUMMARY OF THE INVENTION

The present invention solves the aforesaid problems by means of an electroplated alloy comprising or consisting of:

| | |
|---|---|
| Pt | 60-95% |
| Ni | 5-40% |
| Co | 0-20% |
| other metals | 0-2%... |

wherein said other metals are selected from one or more in the group consisting of Iron, Bismuth, Palladium, Ruthenium, Silver, Tellurium, Molybdenum, Rhenium, Copper, Zinc, Tin, Indium, Gallium, Antimony; where the % is by weight with respect to the total weight of the alloy.

Surprisingly, the alloy of the invention has a white coloring, glossy and bright up to 5 microns, untensioned and with a hardness of 600 HV. The deposit is resistant to oxidation and the high hardness makes it ideal for use on metal accessories that may be subject to wear, such as belt buckles, bag closures, etc.

Equally surprisingly, the alloy of the invention passes the Nickel and Wear release test ensuring the non-allergenicity of the deposit which demonstrates a Nickel release below the limit of detection.

A further subject-matter of the present invention is a galvanic bath (i.e. an electrochemical solution) for the electrodeposition of the aforesaid alloy, said bath comprising:

| | |
|---|---|
| 0.5-10 g/l | Pt in solution |
| 0.1-10 g/l | Ni in solution |
| 0-5 g/l | Co in solution |
| 20-150 g/l | one or more conductive salts |
| 2-50 g/l | one or more complexing agents |
| 0-500 ppm | surfactants; |
| 0-5 g/l | organic brighteners |

pH 4-8.

A subject of the present invention is also a process for the electroplating of an alloy as described above said process comprising immersing an object on which to electroplate the alloy in a galvanic solution as described above and applying a current of 0.5-5.0 A/dmq for a time of 1-60 min at a temperature of 40-90°C.

A further subject of the invention is a galvanized object comprising at least one layer consisting of the alloy of the invention. Such an object surprisingly has shown oxidative and mechanical test resistance characteristics which are comparable and in some cases better than similar deposits of Palladium and alloys thereof of comparable thickness.

Subject of the invention is also a sequence of galvanic deposits comprising the above-described platinum alloy as a third coating layer which may be underlying the finishing layer or may itself constitute a finishing if the coloring of the deposit corresponds to that of the desired aesthetic appearance.

### DETAILED DESCRIPTION OF THE INVENTION

The alloy subject-matter of the present invention has the following colorimetric coordinates: L= 82-87, a=0.2-1.5, b= 3.0-6.0. These coordinates may vary within the range indicated mainly according to the % of Platinum present and only partly depending on the other alloy metals. The higher the % of Platinum in the alloy, the higher will be the L coordinate and the b coordinate. Within all the ranges indicated, the colour of the deposit is still silvery white.

The alloy of the invention preferably comprises Pt at 65-90 % w/w, more preferably at 70-85 % w/w.

The alloy of the invention preferably comprises Ni at 10-30 % w/w, more preferably at 10-25 % w/w.

Co, if present in the alloy of the invention, is preferably present at 2-8% w/w more preferably at 3-7% w/w.

The alloy of the invention preferably consists of:
- Pt: 65-95 % w/w; more preferably 70-85 % w/w
- Ni: 10-30 % w/w; more preferably at 10-25 % w/w
- Co: absent or present at 2-8 % w/w; more preferably at 3-7 % w/w
other metals 0-2%...

The Platinum content in solution can vary from 0.5 g/l up to 10 g/l, preferably from 1 g/l to 6 g/l, even more preferably between 2 g/l and 5 g/l. The salts and solutions of Platinum that can be used can be all salts known to person skilled in the art, preferably those in which Platinum has oxidation number +2. Examples are the following products: Ammonium tetrachloroplatinate, DNS (Platinum dihydrogen-dithritosulphate), P SALT (Platinum(II) diaminodinitrite), Q SALT (Platinum tetramminohydrogen-phosphate).

The Nickel content in solution can vary from 0.1 g/l to 10 g/l, preferably from 0.1 g/l to 6 g/l, even more preferably between 0.25 g/l and 2 g/l, and in any case depending on the concentration of Platinum present and the alloy to be deposited. All Nickel salts can be used, with preference given to Nickel Chloride, Nickel Sulphate and Nickel Sulphamate and associated complexes in aqueous solution with the conductive salts and the complexing agents indicated below.

Cobalt can only partially replace the Nickel content. Cobalt can be added both with oxidation number +2 and +3 always as chloride, sulphate and sulphamate salts as well as in solution as complexes with the conductive salts and the complexing agents indicated below.

The solution consists of one or more conductive salts selected from chlorides, sulphates, sodium, potassium or ammonium sulphamates. The concentration of these Salts in solution can vary from 20 to 150 g/l.

The solution further comprises complexing agents, preferably selected from the group consisting of primary, secondary and tertiary ammonia and/or amines and/or polyamines or their derivatives, preferably ammonium hydroxide. The concentration of the complexing agents can vary from 2 to 50 g/l and varies depending on whether the conductive salt contains ammonium or not.

The solution may contain other types of complexing agents falling into the category of carboxylic and polycarboxylic acids and their salts in a concentration that is variable from 0 to 50 g/l, preferably between 5 g/l and 30 g/l.

Surfactants and surfactant mixtures well known to the expert in art may be present in the solutions, such as, for example, wetting agents from the family of Alkyl ethers Phosphonates, Alkyl ethers Sulfonates, Alkylaryl polyol ethoxylates and the related sulphonated derivatives, quaternary ammonium salts of alkanes or aromatic compounds such as also Alkyl Betaine. These surfactants may be present in a concentration that is variable from 0 to 500 ppm.

The bath may contain other metals in a variable concentration but not exceeding 2% by weight in the deposited alloy. These metals can act as brighteners and grain finishers and can be: Iron, Bismuth, Palladium, Ruthenium, Silver, Tellurium, Molybdenum, Rhenium, Copper, Zinc, Tin, Indium, Gallium, Antimony, preferably Iron and Copper. The metals can be added in the form of soluble salts or as insoluble salts which can however be solubilised thanks to the previously selected complexing agents in the bath.

In addition, organic brighteners which are known to the expert in the art for their brightening capacity of deposits of pure Platinum and/or Nickel or Cobalt and their alloys may be included in the solutions. Examples are the following brighteners: nicotinamide, saccharin, allyl sulphonate, nicotinic acid, pyridylacrylic acid and pyridinium propyl sulphobetaine etc. The concentration of these brighteners can vary from 10 ppm to 5 g/l, preferably from 50 ppm to 1 g/l.

The working pH is comprised between 5 and 8, preferably between 6.5 and 7.5. Below this range, the stability of the bath decreases, whereas above this range, ammonia develops and the deposition efficiency is significantly lowered.

The electrodeposition process according to the invention is preferably carried out for 2-30 min at a temperature of 55-75°C.

An object galvanized according to the present invention is non-allergenic. Galvanized objects, including non-allergenic objects as described below, are objects in which at least one step of the production process includes the electrodeposition of a metal or metal alloys. Preferably said objects are included in the following product classes: jewellery, costume jewellery, leather goods, clothing, small parts, watchmaking, eyewear, decorative plating, trinkets, closures, caps/perfume packages.

Preferably, the galvanized object comprising at least one layer consisting of an alloy according to the invention is comprising or consisting of:
a) a base material;
b) a preparatory layer that depends on the base material used and the type of glossy or opaque finishing to be obtained, said preparatory layer deposited on top of the base material;
c) a first coating layer consisting of white bronze or a nickel-phosphorus or nickel-cobalt-phosphorus deposit deposited over the preparatory layer so that it protects the base material and the easily oxidisable underlying layers;
d) a second coating layer consisting of a Cu-Sn-Pt or Cu-Sn-Pd or Cu-Sn-Pt-Pd alloy, this layer is optional and is only used if necessary to pass the most aggressive tests;
e) a third coating layer consisting of an alloy according to the present invention;
f) possibly, if the third layer does not have the desired color for the final finishing, one or more final layers can be deposited that are normally composed of precious metals, non-precious metals or paints which determine the aesthetic appearance of the object.

Other low thickness (less than 0.1 micron) deposits, commonly known as Flash, may be interposed between the various layers in order to apply barriers to intermetallic migration and to optimise adhesion between the various galvanic layers avoiding delamination of the upper layers from the lower ones. For each galvanic cycle, the embodiments normally provide for the interposition of flash layers, but if it is subsequently found that the cycle still passes the various tests even without flash layers, then they can be omitted from the cycle.

For processes containing Nickel, the first layer of white Bronze is not recommended as it increases production costs without any appreciable improvement in oxidation resistance tests, while the use of the Nickel-Phosphorus or Nickel-Cobalt-Phosphorus alloy deposit is useful.

The base material may consist or comprise Bronze, Brass, Zamak, Aluminum, Nickel silver, Steel and other Copper and Tin alloys, but also galvanizable plastics such as ABS.

The preparatory layer is selected by the person skilled in the art according to the base material used and the type of structural finishing (not colorimetric) to be obtained. For example, for finishings with a glossy appearance, both Copper from glossy levelling Copper baths and Nickel from glossy levelling galvanic Nickel baths can be deposited while for finishings with an opaque and aged appearance, the base material can be pre-treated with a tumbling process and subsequently non-levelling Nickel or Bronze deposited to preserve the roughness obtained on the base material.

Preferably in Nickel-free or non-allergenic cycles in which the base material is Brass or Zamak the preparatory layer is Copper; when the base material is Steel preferably the preparatory layer is a Gold flash to optimise adhesion; for cycles comprising Nickel if the base material is Brass then the preparatory layer is directly Nickel while if the base material is Zamak then it must be pre-treated with Copper before depositing the preparatory layer of Nickel.

The preparatory layer has preferably a thickness of 7-15 microns.

The precious metal constituting the final layer comprises the alloy subject-matter of the invention in the case of white finishings otherwise Gold, Silver, Ruthenium, Rhodium, Osmium, Iridium, and their alloys or also non-precious metals such as for example Tin, Copper, Zinc, Iron, Nickel, Cobalt, preferably Gold, Silver, Ruthenium, Rhodium and even more preferably Gold and Ruthenium.

The final layer may also consist of non-precious material for low-cost products, in particular Chrome for white or black finishes, Tin and Nickel alloys and Tin and Cobalt alloys, colored or colorless, transparent or colorless paints. In these cases, passing the tests is fundamentally determined by the final deposit, but if the under layer is resistant, there is still an improvement.

The first layer, if of white Bronze, can be any white Bronze. Preferably, and advantageously, the first layer of Bronze consists of a white Bronze alloy with a composition that is variable between Sn 25-45%, Zn 0-15%, Cu enough to 100% but still less than 60%. The thickness of the first layer of Bronze is preferably variable from 0.5 microns to 10 microns, more preferably between 1 micron and 5 microns, even more preferably between 1.1 microns and 4 microns.

The first layer if made of a Nickel-Cobalt-Phosphorus alloy, is a deposit whose alloy preferably consists of Co 1-70%, P 6-20%, Ni 10-90%, preferably Co 5-60%, P 8-18%, Ni 25-85%, or alternatively preferably in accordance with that described in patent application WO 2017/182957 A1.

The thickness of the first layer of Nickel-Cobalt-Phosphorus alloy is preferably variable from 0.5 microns to 10 microns, more preferably between 0.75 microns and 6 microns, even more preferably between 1 micron and 3 microns.

The second layer, which is optional because it can only be deposited if necessary to pass particularly aggressive tests, preferably consists of a Cu-Sn-Pt or Cu-Sn-Pd or Cu-Sn-Pt-Pd alloy in accordance with what is described in patent application IT102020000011203 or patent application WO2018/146623A1. The thickness of this deposit is preferably from 0.1 micron to 2 micron, more preferably between 0.3 micron and 1 micron.

The third layer made of an alloy according to the present invention, as described above, preferably has a thickness between 0.05 microns (flash in the jargon called "putting to color") to 5 microns, more preferably from 0.05 microns to 2 microns, even more preferably between 0.05 microns and 1 micron.

If the third layer does not have the desired color for the final finishing, one or more final layers can be deposited that are normally composed of precious metals, non-precious metals or paints which determine the aesthetic appearance of the object. The thickness of the final precious metal layer depends on the thickness of the second and third layer and on the type of finishing it is wished to achieve. For high thicknesses (0.5-1 microns) of the second Cu-Sn layer with Platinum or Palladium and/or for glossy finishing low thicknesses of the third layer and any subsequent layers of precious metal are sufficient, whereas for low thicknesses (0.1-0.3 microns) of the second Cu-Sn layer with Platinum or Palladium and/or finishings involving a final tumbling on the finished object, higher thicknesses of the third layer and any subsequent layers of precious metal are required. Tumbling can also be carried out on intermediate layers and in these cases the final thicknesses are treated as if the finishings were glossy, so it is obvious that passing the tests is simplified compared to a final tumbling that could instead scratch the object in depth. The thickness may also depend on the hardness of the final deposit. In general, soft deposits such as Gold deposits (about 100HV) require greater thicknesses, whereas harder deposits such as Palladium or alloys subject-matter of the invention (about 600HV) require lower thicknesses.

In general, the thicknesses of precious metals can vary from Flash (lower than 0.05 microns) to 2 microns, more preferably from 0.1 microns to 1.5 microns, even more preferably from 0.15 microns to 1.0 microns.

The cycles indicated above guarantee excellent test resistance and a significant reduction in production costs thanks to the elimination of finishing deposits containing pure Palladium or its alloys.

The present invention can be better understood in the light of the following embodiments.

### EXPERIMENTAL PART

### EXAMPLE 1 - Preparation of a white deposit consisting of a Platinum and Nickel alloy according to the invention.

The following electrolyte solution was prepared:
2.5 g/l of Platinum as Platinum Dihydrogen Dinitritosulphate complex.
0.5 g/l of Nickel as Nickel Sulphate
100 g/l of Ammonium Sulphate

The pH of the bath was adjusted to 7 with 25% ammonium hydrate.

The solution was brought to 60°C. A brass plate measuring 5 x 3.5 cm was plated with the solution described above for 10 minutes at 2 A/dmq.

The thickness deposited is equal to 0.6 microns. Under the SEM scanning electron microscope, the deposited alloy has the following composition:

| | |
|---|---|
| Pt | 75.2% |
| Ni | 24.8% |

The Lab colorimetric coordinates measured with a CM-700d spectrophotometer brand KONICA MINOLTA SENSING, are: L= 84.6, a=0.5, b=4.1

### EXAMPLE 2 - Preparation of a white deposit consisting of a Platinum, Nickel and Cobalt alloy according to the invention.

The following electrolyte solution was prepared:
3.5 g/l of Platinum as Platinum Dihydrogen Dinitritosulphate complex.
0.25 g/l of Nickel as Nickel Sulphate
0.25 g/l of Cobalt as Cobalt Sulphate
100 g/l of Ammonium Sulphate

The pH of the bath was adjusted to 7 with 25% ammonium hydrate.

The solution was brought to 60°C. A brass plate measuring 5 x 3.5 cm was plated with the solution described above for 10 minutes at 2 A/dmq.

The thickness deposited is equal to 0.5 microns. Under the SEM scanning electron microscope, the deposited alloy has the following composition:

| | |
|---|---|
| Pt | 83.4% |
| Ni | 11.2% |
| Co | 5.4% |

The Lab colorimetric coordinates measured with a CM-700d spectrophotometer brand KONICA MINOLTA SENSING, are: L= 84.1, a=0.4, b=4.3

### EXAMPLE 3 - Preparation of a white deposit consisting of a Platinum, Nickel and Iron alloy according to the invention.

The following electrolyte solution was prepared:
2.5 g/l of Platinum as Platinum Dihydrogen Dinitritosulphate complex.
0.5 g/l of Nickel as Nickel Sulphate
0.015 g/l of Iron as Iron Ammonium Citrate
100 g/l of Ammonium Sulphate

The pH of the bath was adjusted to 7 with 25% ammonium hydrate.

The solution was brought to 60°C. A brass plate measuring 5 x 3.5 cm was plated with the solution described above for 10 minutes at 2 A/dmq.

The thickness deposited is equal to 0.65 microns. Under the SEM scanning electron microscope, the deposited alloy has the following composition:

| | |
|---|---|
| Pt | 79.5% |
| Ni | 19.7% |
| Fe | 0.8% |

The Lab colorimetric coordinates measured with a CM-700d spectrophotometer brand KONICA MINOLTA SENSING, are: L= 82.6, a=0.8, b=4.5.

### EXAMPLE 4 (Comparative)

Fifteen brass specimens with a surface area of 0.2 dmq were galvanized according to a standard non-allergenic galvanic cycle containing Nickel with the following galvanic layers:

| | Composition | Thickness (microns) |
|---|---|---|
| Base material | Brass | |
| Preparatory layer | Acid copper | 10 |
| First coating | White Bronze | 3.0 |
| External coating | Non-allergenic Palladium Nickel alloy L=83.4, a=0.7, b=4.8 Pd 82%, Ni 18% | 1.5 |

The objects were then subjected to the tests indicated in table 1 after carrying out the TURBULA ISO 23160:2011 wear test as a pre-treatment at 3 and 30 minutes:

**Table 1**

| | |
|---|---|
| SULFUR DIOXIDE OXIDATION (UNI ISO4524/2:2008) | 8 hours |
| SO2/NOx OXIDATION Internal method | 2 hours |
| Thioacetamide (UNI EN ISO 4538:1998) | 48 hours |
| Damp Heat (UNI EN ISO 4611:2011) | 96 hours |
| Humid Heat with Skin (UNI ISO 4611:2011) | 96 hours |
| Resistance to synthetic sweat (NF S 80-772:2010) | 24 hours |

The objects pass all the tests they have been subjected to.

In addition, the TURBULA wear test used as a pre-treatment showed no significant variation in color due to wear of the objects at either 3 minutes or 30 minutes.

The three remaining specimens have been tested for Nickel Release after wear (UNI EN 12472 - UNI EN 1811). The results (0.16 µg/cm²week, 0.22 µg/cm²week, 0.14 µg/cm²week) are all positive, remaining below the limit of 0.88 µg/cm²week.

### EXAMPLE 5

Fifteen brass specimens with a surface area of 0.2 dmq were galvanized according to a standard non-allergenic galvanic cycle containing Nickel with the following galvanic layers:

| | Composition | Thickness (microns) |
|---|---|---|
| Base material | Brass | |
| Preparatory layer | Acid copper | 10 |
| First coating | White Bronze | 3.0 |
| Second coating | Cu-Sn-Pt with the following alloy: Cu 24.5%, Sn 52.1%, Pt 23,4% | 1.0 |
| Third coating according to the invention | Platinum-Nickel L=84.6, a=0.5, b=4.1 Pt 82.1%, Ni 17.9% | 0.2 |

The objects were then subjected to the tests indicated in Table 1 after carrying out the TURBULA ISO 23160:2011 wear test as a pre-treatment at 3 and 30 minutes: The objects pass all the tests they have been subjected to.

In addition, the TURBULA wear test used as a pre-treatment showed no significant variation in color due to wear of the objects at either 3 minutes or 30 minutes.

The three remaining specimens have been tested for Nickel Release after wear (UNI EN 12472 - UNI EN 1811). The results are all positive with a value below the LoD (Limit of Detection).

### EXAMPLE 6

Eleven brass specimens with a surface area of 0.2 dmq were galvanized according to a standard non-allergenic electrodeposition cycle containing Nickel with the following galvanic layers:

| | Composition | Thickness (microns) |
|---|---|---|
| Base material | Brass | |
| Preparatory layer | Acid copper | 10 |
| First coating | White Bronze | 3.0 |
| Third coating according to the invention | Platinum-Nickel L=84.4, a=0.6, b=4.3 Pt 80.5%, Ni 19.5% | 0.2 |

The objects were then subjected to the tests of Table 1.

The objects pass all the tests they have been subjected to.

The TURBULA wear test was performed on two specimens and showed no significant variation in color due to wear of the objects at either 3 minutes or 30 minutes.

The three remaining specimens have been tested for Nickel Release after wear (UNI EN 12472 - UNI EN 1811). The results are all positive with a value below the LoD (Limit of Detection).

### EXAMPLE 7

Eleven brass specimens with a surface area of 0.2 dmq were galvanized according to a standard non-allergenic electrodeposition cycle containing Nickel with the following galvanic layers:

| | Composition | Thickness (microns) |
|---|---|---|
| Base material | Brass | |
| Preparatory layer | Acid copper | 10 |
| First coating | White Bronze | 3.0 |
| Third coating according to the invention | Platinum-Nickel L=84.1, a=0.7, b=4.1 Pt 84.2%, Ni 18.8% | 0.2 |
| External coating | Gold | 0.1 |

The objects were then subjected to the tests of Table 1

The objects pass all the tests they have been subjected to.

TURBULA wear tests were carried out on two specimens which showed significant variation in color between the yellow of the gold and the white of the Platinum-Nickel due to wear of the objects at 30 minutes while no variation was detectable at 3 minutes.

The three remaining specimens have been tested for Nickel Release after wear (UNI EN 12472 - UNI EN 1811). The results are all positive with a value below the LoD (Limit of Detection).

### EXAMPLE 8

Eleven brass specimens with a surface area of 0.2 dmq were galvanized according to a standard non-allergenic electrodeposition cycle containing Nickel with the following galvanic layers:

| | Composition | Thickness (microns) |
|---|---|---|
| Base material | Brass | |
| Preparatory layer | Acid copper | 10 |
| First coating | White Bronze | 3.0 |
| Third coating according to the invention | Platinum-Nickel L=84.5, a=0.7, b=4.0 Pt 81.6%, Ni 18.4% | 0.2 |
| External coating | Gold | 0.5 |

The objects were then subjected to the tests of Table 1.

The objects pass all the tests they have been subjected to.

The TURBULA wear test was performed on two specimens and showed no significant variation in color due to wear of the objects at either 3 minutes or 30 minutes.

The three remaining specimens have been tested for Nickel Release after wear (UNI EN 12472 - UNI EN 1811). The results are all positive with a value below the LoD (Limit of Detection).

### EXAMPLE 9 (Comparative)

Eight brass specimens with a surface area of 0.2 dmq were galvanized according to a standard electrodeposition cycle containing Nickel with the following galvanic layers:

| | Composition | Thickness (microns) |
|---|---|---|
| Base material | Brass | |
| Preparatory layer | Glossy nickel | 10 |
| First coating | Nickel-Phosphorus | 1.1 |
| External coating | Palladium-Nickel L=83.4, a=0.7, b=4.8 Pd 76%, Ni 24% | 0.2 |

The objects were then subjected to the tests of Table 1

The objects pass all the tests they have been subjected to.

The TURBULA wear test was performed on two specimens and showed no significant variation in color due to wear of the objects at either 3 minutes or 30 minutes.

### EXAMPLE 10

Eight brass specimens with a surface area of 0.2 dmq were galvanized according to a standard electrodeposition cycle containing Nickel with the following galvanic layers:

| | Composition | Thickness (microns) |
|---|---|---|
| Base material | Brass | |
| Preparatory layer | Glossy nickel | 10 |
| First coating | Nickel-Phosphorus | 1.1 |
| External coating according to the invention | Platinum-Nickel L=84.2, a=0.7, b=4.1 Pt 81.8%, Ni 18.2% | 0.1 |

The objects were then subjected to the tests of Table 1

The objects pass all the tests they have been subjected to.

The TURBULA wear test was performed on two specimens and showed no significant variation in color due to wear of the objects at either 3 minutes or 30 minutes.

## Claims

1. An electroplated alloy comprising or consisting of:
| | |
|---|---|
| Pt | 60-95% |
| Ni | 5-40% |
| Co | 0-20% |
| other metals | 0-2%... |
wherein said other metals are selected from one or more in the group consisting of Iron, Bismuth, Palladium, Ruthenium, Silver, Tellurium, Molybdenum, Rhenium, Copper, Zinc, Tin, Indium, Gallium, Antimony; where the% is by weight with respect to the total weight of the alloy.

2. The alloy according to claim 1 having the following colorimetric coordinates: L = 82-87, a = 0.2-1.5, b = 3.0-6.0.

3. The alloy according to any one of the preceding claims in which Pt is present at 65-90% w/w, preferably at 70-85% w/w.

4. The alloy according to any one of the preceding claims wherein Ni is present at 10-30% w/w, preferably at 10-25% w/w.

5. The alloy according to any one of the preceding claims in which Co, if present, is present at 2-8% w/w. preferably at 3-7% w/w.

6. An electrochemical solution for the electroplating of an alloy according to any one of claims 1-5, said solution comprising:
| | |
|---|---|
| 0.5-10 g/l | Pt in solution |
| 0.1-10 g/l | Ni in solution |
| 0-5 g/l | Co in solution |
| 20-150 g/l | one or more conductive salts |
| 2-50 g/l | one or more complexing agents |
| 0-500 ppm | surfactants; |
| 0-5 g/l | organic brighteners; |
pH 4-8.

7. The solution according to claim 6 wherein Pt is present in solution in the form of Pt⁺² and in a concentration of 1-6 g/l, preferably between 2-5 g/l.

8. The solution according to any one of claims 6-7 wherein Ni is present in solution in a concentration of 0.1-6 g/l, preferably between 0.25-2 g/l.

9. The solution according to any one of claims 6-8 wherein the complexing agents are selected from the group consisting of primary, secondary and tertiary ammonia and/or amines and/or polyamines or their derivatives, carboxylic and polycarboxylic acids and their salts.

10. The solution according to any one of claims 6-9 further comprising organic brighteners in a concentration 0.01-5 g/l selected from the group consisting of nicotinamide, saccharin, allyl sulfonate, nicotinic acid, pyridylacrylic acid and pyridinium propyl sulphobetaine.

11. A process for the electroplating of an alloy according to any one of claims 1-5, said process comprises immersing an object on which to electrodepose the alloy in an electrochemical solution according to any one of claims 6-10 and applying a current of 0.5 -5.0 A/dmq for a time of 1-60 min at a temperature of 40-90 ° C.

12. The process according to claim 11 wherein the time is 2-30 min and the temperature 55-75 ° C.

13. A galvanized object comprising at least one layer consisting of an alloy according to any one of claims 1-5.

14. The galvanized object according to the previous claim comprising or consisting of:
a) a base material;
b) a preparatory layer that depends on the base material used and the type of glossy or opaque finishing to be obtained, said preparatory layer deposited on top of the base material;
c) a first coating layer consisting of white bronze or a nickel-phosphorus or nickel-cobalt-phosphorus deposit deposited over the preparatory layer;
d) an optional second coating layer consisting of a Cu-Sn-Pt or Cu-Sn-Pd or Cu-Sn-Pt-Pd alloy;
e) a third coating layer consisting of an alloy according to any one of claims 1-5;
f) if the third layer does not have the desired color for the final finishing, one or more final layers, which determine the aesthetic appearance of the object;
in which Flash deposits can be interposed between the various layers.

15. The object according to any one of claims 13-14 in which the layer consisting of the alloy according to any one of claims 1-5 has a thickness of 0.5-5 microns.
